# EUROPEAN PATENT APPLICATION

(11) **EP 2 889 513 A2**
(43) Date of publication of application: **01.07.2015**
(21) Application number: 14200657.6
(22) Date of filing: 30.12.2014
(51) Int. Cl.: F16H 61/02

(54) **Vehicle hybrid transmission and control method thereof**

(30) Priority: 30.12.2013 KR 20130166510
(71) Applicant: Hyundai Dymos Incorporated, Seosan-si, Chungcheongnam-do 356-705 (KR)
(72) Inventor: Park, Min Seo, 406-829 Incheon (KR); Choi, Jin Wook, 138-930 Seoul (KR)
(74) Representative: Zimmermann, Tankred Klaus

(57) **Abstract**

In vehicle hybrid transmission of the present disclosure realized by coupling an AMT to a motor, a reverse shift stage may be realized even when parts, such as an R-driving gear, an R-driven gear, an R-sleeve, and a reverse idler which are merely used to realize the reverse shift stage, are excluded from the transmission. Consequently, it may be effective in mounting the transmission to a vehicle since the transmission has a reduced length. In addition, since the number of parts required for the transmission is decreased, the transmission has a simple configuration and a decreased weight, thereby enabling cost of the transmission to be reduced and fuel efficiency of the vehicle to be improved.

## Description

### BACKGROUND OF THE INVENTION

### Field of the Invention

Exemplary embodiments of the present invention relate to a vehicle hybrid transmission and a control method thereof, and more particularly, to a technique capable of forming a reverse shift stage without an R-gear and a reverse idle gear forming the reverse shift stage.

### Description of the Related Art

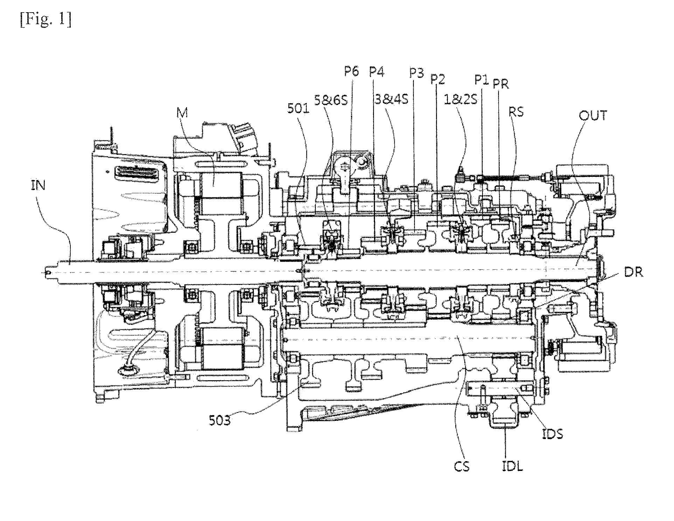

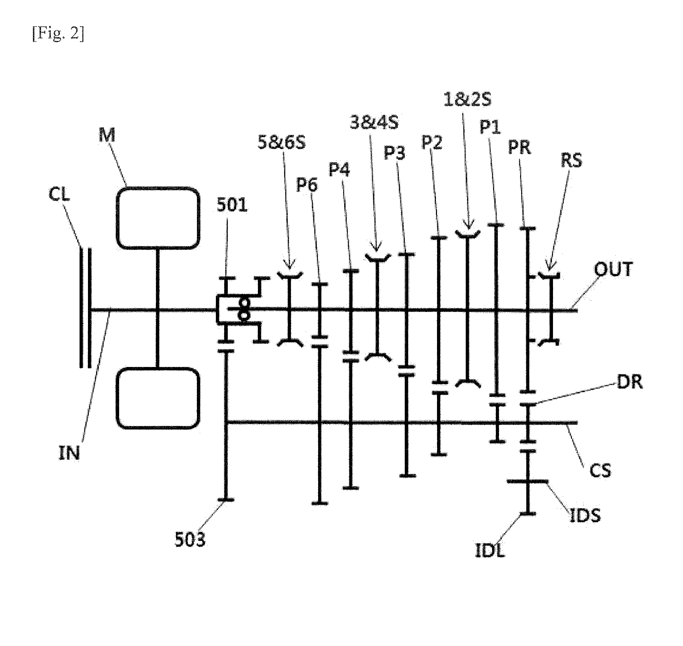

Fig. 1 shows a hybrid transmission using a synchromesh type transmission mechanism. The hybrid transmission is realized by coupling an AMT (Automated Manual Transmission) to a motor. Fig. 2 is a view schematically illustrating the transmission in Fig. 1.

The hybrid transmission is configured to transfer power by connecting a rotor of a motor M to an input shaft IN to which the power of an engine is input through a clutch. In the hybrid transmission, the input shaft IN is concentrically connected to an output shaft OUT and the output shaft OUT is connected parallel to a counter shaft CS. Consequently, the power is always provided from the input shaft IN through a counter driving gear 510 and a counter driven gear 503.

The hybrid transmission may realize forward first to sixth shift stages and a reverse first shift stage. In the hybrid transmission, a first or second shift stage may be realized when a first or second driven gear P1 or P2 provided on the output shaft OUT is selected by a first & second synchronizer 1&2S, a third or fourth shift stage may be realized when a third or fourth driven gear P3 or P4 is selected by a third & fourth synchronizer 3&4S, a fifth shift stage may be realized when the input shaft IN is directly connected to the output shaft OUT by a fifth & sixth synchronizer 5&6S, and a sixth shift stage may be realized when a sixth driven gear P6 is connected to the output shaft OUT by the fifth & sixth synchronizer 5&6S.

In addition, the reverse shift stage is configured such that, when an R-driven gear PR is connected to the output shaft OUT by an R-sleeve RS provided on the output shaft OUT, the power from an R-driving gear DR of the counter shaft CS is reversed through a reverse idler IDL to be transferred to the R-driven gear PR and thus the power in the reverse shift stage is taken off to the output shaft OUT.

In order to realize the reverse shift stage in the hybrid transmission operated by the above configuration, the R-driving gear DR is provided on the counter shaft CS, the reverse idler IDL is arranged on a separate idler shaft IDS, and the R-driven gear PR and the R-sleeve RS are provided on the output shaft OUT. For this reason, it is ineffective in mounting the transmission to a vehicle since the transmission has an elongated length. In addition, since the number of parts required for the transmission is increased, the transmission has a complicated configuration and an increased weight, thereby causing increase in cost of the transmission and poor fuel efficiency in the vehicle.

The matters described as the related art have been provided only for assisting the understanding for the background of the present invention and should not be considered as corresponding to the related art already known to those skilled in the art.

### [Related Art Document]

### [Patent Document]

(Patent Document 0001) KR 1020130115618 A

### SUMMARY OF THE INVENTION

An object of the present invention is to provide a vehicle hybrid transmission realized by coupling an AMT to a motor, in which a reverse shift stage may be realized even when parts, such as an R-driving gear, an R-driven gear, an R-sleeve, and a reverse idler which are merely used to realize the reverse shift stage, are excluded from the transmission, and a control method thereof. Consequently, it may be effective in mounting the transmission to a vehicle since the transmission has a reduced length. In addition, since the number of parts required for the transmission is decreased, the transmission has a simple configuration and a decreased weight, thereby enabling cost of the transmission to be reduced and fuel efficiency of the vehicle to be improved.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a vehicle hybrid transmission includes an input shaft configured so as to be connected to a motor and receive power of an engine through a clutch, an output shaft concentrically installed to the input shaft so as be rotatable relative thereto, a counter shaft receiving the power from the input shaft and installed parallel to the output shaft, a plurality of shift gear pairs pairing up with each other to be circumscribed on the counter shaft and the output shaft and forming a series of forward shift stages, a plurality of synchronizers synchronizing shift gears on the output shaft forming the shift gear pairs with the output shaft such that the shift gears are connected to or disconnected from the output shaft, a gear shift unit for driving the plurality of synchronizers, a clutch actuator for controlling the clutch, and a controller configured to connect a first driven gear to the output shaft and reversely rotate the motor in opposition to driving of the forward shift stages by driving the clutch actuator and driving the synchronizers using the gear shift unit according to a selection signal of a reverse shift stage by a driver.

In accordance with another aspect of the present invention, a method of controlling the vehicle hybrid transmission includes performing reverse operation determination of determining whether the driver selects the reverse shift stage, performing forward shift stage fastening of connecting the first driven gear (or another forward driven gear) to the output shaft by operating the synchronizers using the gear shift unit when the driver is determined to select the reverse shift stage, and performing motor reverse rotation of performing reverse traveling by reversely rotating the motor in a direction opposite to forward driving when the first driven gear is fastened to the output shaft.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view illustrating a structure of a hybrid transmission according to the related art;
Fig. 2 is a view schematically illustrating the structure of the hybrid transmission in Fig. 1;
Fig. 3 is a view for explaining a structure of a vehicle hybrid transmission according to an embodiment of the present invention; and
Fig. 4 is a flowchart illustrating a method of controlling a vehicle hybrid transmission according to an embodiment of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

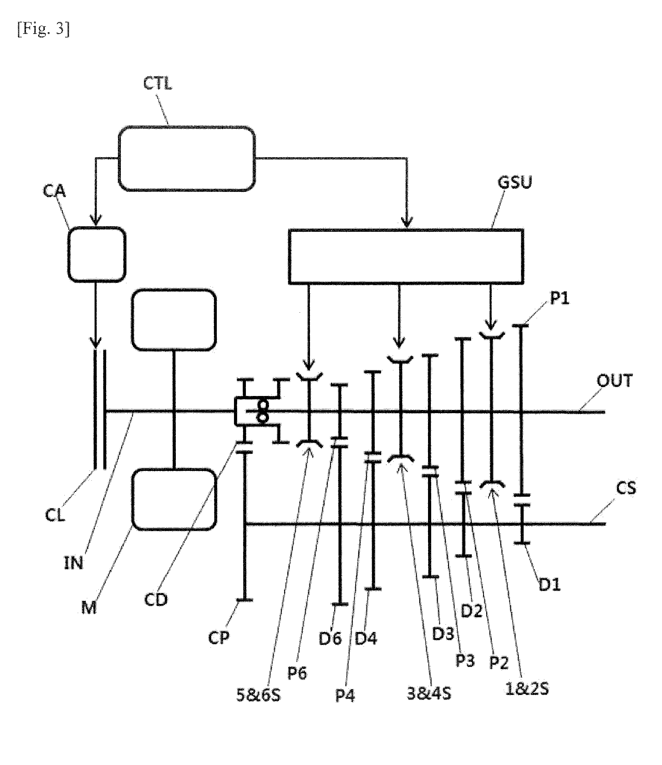

Referring to Fig. 3, a vehicle hybrid transmission according to an embodiment of the present invention includes an input shaft IN configured so as to be connected to a motor M and receive power of an engine through a clutch, an output shaft OUT which is concentrically installed to the input shaft IN so as be rotatable relative thereto, a counter shaft CS which receives the power from the input shaft IN and is installed parallel to the output shaft OUT, a plurality of shift gear pairs which pair up with each other to be circumscribed on the counter shaft CS and the output shaft OUT and form a series of forward shift stages, a plurality of synchronizers which synchronize shift gears on the output shaft OUT forming the shift gear pairs with the output shaft OUT such that the shift gears are connected to or disconnected from the output shaft OUT, a gear shift unit GSU for driving the plurality of synchronizers, a clutch actuator CA for controlling the clutch CL, and a controller CTL configured to connect a first driven gear P1 to the output shaft OUT and reversely rotate the motor M in opposition to driving of the forward shift stages by driving the clutch actuator CA and driving the synchronizers using the gear shift unit GSU according to a selection signal of a reverse shift stage by a driver.

That is, the hybrid transmission of the present invention may realize a reverse shift stage by reversely rotating the motor in a state of forming a first shift stage, without using an R-driving gear, an R-driven gear, an R-sleeve, a reverse idler, and the like which are conventionally used to realize the reverse shift stage. Consequently, since the number of parts constituting the transmission is decreased, the transmission has a simple configuration and a decreased weight, thereby enabling cost of the transmission to be reduced and fuel efficiency of the vehicle to be improved. Furthermore, it may be effective in mounting the transmission to the vehicle since the transmission has a reduced length due to removal of an installation space itself of the above parts.

A typical TCU (Transmission Control Unit) may be used as the controller CTL. The controller CTL may operate the gear shift unit GSU by recognizing that the driver selects the reverse shift stage according to an operation of a shift lever.

The input shaft IN is provided with a counter driving gear CD and the counter shaft CS is integrally provided with a counter driven gear CP engaged to the counter driving gear CD. Consequently, the counter shaft CS is always rotated by the input shaft IN.

The output shaft OUT is installed so as to linearly extend from the input shaft IN in such a manner that one end of the output shaft OUT is supported on the input shaft IN by a bearing. One of the plurality of synchronizers may directly connect the output shaft OUT to the input shaft IN or disconnect the output shaft OUT therefrom.

That is, when the output shaft OUT is directly connected to the input shaft IN, a fifth shift stage having a gear ratio of 1:1 is realized in the embodiment.

The first driven gear P1 to realize a first shift stage and a second driven gear P2 to realize a second shift stage are adjacently arranged on the output shaft OUT according to the embodiment, and a first & second synchronizer 1&2S is provided between the first and second driven gears P1 and P2. Thus, when the controller CTL connects the first driven gear P1 to the output shaft OUT according to the selection signal of the reverse shift stage by the driver, the first driven gear P1 is connected to the output shaft OUT by the first & second synchronizer 1&2S.

Of course, in addition to the above configuration, the counter shaft CS is provided with a first driving gear D1, a second driving gear D2, a third driving gear D3, a fourth driving gear D4, and a sixth driving D6, and the output shaft OUT is provided with the second driven gear P2 circumscribed on to the second driving gear D2 to be engaged thereto, a third driven gear P3 circumscribed on to the third driving gear D3 to be engaged thereto, a fourth driven gear P4 circumscribed on to the fourth driving gear D4 to be engaged thereto, and a sixth driven gear P6 circumscribed on to the sixth driving gear D6 to be engaged thereto, in addition to the first driven gear P1. Thus, forward six shift stages in total are realized. In this case, the arrangement structure of the respective driving gears D1, D2, D3, D4, D5, and D6 of the forward six shift stages may be changed as occasion demands.

In addition, the output shaft OUT is provided with a third & fourth synchronizer 3&4S which is installed between the third and fourth driven gears P3 and P4 so as to connect the third or fourth driven gear P3 or P4 to the output shaft OUT or disconnect the third or fourth driven gear P3 or P4 therefrom, and a fifth & sixth synchronizer 5&6S which connects the sixth driven gear P6 to the output shaft OUT or disconnect the sixth driven gear P6 therefrom and forms or releases a fifth shift stage by directly connecting the output shaft OUT to the input shaft IN or disconnecting the output shaft OUT therefrom, in addition to the first & second synchronizer 1&2S.

The gear shift unit GSU selects one of the first & second synchronizer 1&2S, the third & fourth synchronizer 3&4S, and the fifth & sixth synchronizer 5&6S by receiving the control of the controller CTL and forms any shift stage by the shifting operation. The clutch actuator CA intermits the clutch CL by receiving the control of the controller CTL, thereby enabling the power transferred from the engine to the input shaft IN to be connected or blocked.

As described above, the hybrid transmission of the present invention may realize the reverse shift stage using the first shift stage and the motor M without separate parts for forming the reverse shift stage, and thus the weight, volume, and cost of the transmission may be reduced.

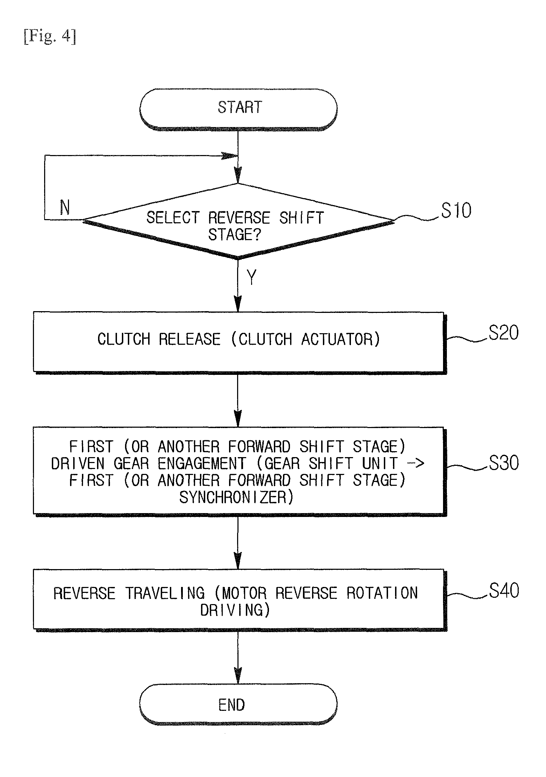

Meanwhile, as shown in Fig. 4, a method of controlling a hybrid transmission includes a reverse operation determination step S10 of determining whether a drive selects a reverse shift stage, a forward shift stage fastening step S30 of connecting a first driven gear P1 (or another forward shift stage) to an output shaft OUT by operating a synchronizer using a gear shift unit GSU when the driver is determined to select the reverse shift stage, and a motor reverse rotation step S40 of performing reverse traveling by reversely rotating a motor M in a direction opposite to forward driving when the first driven gear P1 (or another forward shift stage) is fastened to the output shaft OUT.

That is, when the driver is determined to select the reverse shift stage, a controller CTL detects the same in the reverse operation determination step S10 and reversely rotates the motor M in a direction opposite to realization of a forward first shift stage in a state of performing the forward shift stage fastening step S30 such that a transmission may realize a first shift stage. Consequently, the reverse shift stage is realized.

In this case, the power of an engine should not be transferred to an input shaft IN. Therefore, when a clutch CL is fastened before the forward shift stage fastening step S30 after the reverse operation determination step S10, it is preferable that the method further includes a clutch release step S20 of releasing the clutch CL.

Meanwhile, in the hybrid transmission of the present invention, other forward higher shift stages may also be fastened in addition to the first shift stage in the forward shift stage fastening step S30, according to whether a road is an uphill road, a downhill road, or a flat road, namely, a gradient of the road. As a result, various reverse gear ratios suitable for road situations may also be realized.

As is apparent from the above description, in a hybrid transmission according to an embodiment of the present invention realized by coupling an AMT to a motor, a reverse shift stage may be realized even when parts, such as an R-driving gear, an R-driven gear, an R-sleeve, and a reverse idler which are merely used to realize the reverse shift stage, are excluded from the transmission. Consequently, it may be effective in mounting the transmission to a vehicle since the transmission has a reduced length. In addition, since the number of parts required for the transmission is decreased, the transmission has a simple configuration and a decreased weight, thereby enabling cost of the transmission to be reduced and fuel efficiency of the vehicle to be improved.

While the present invention has been described with respect to the specific embodiments, it will be apparent to those skilled in the art that various changes and modifications may be made without departing from the spirit and scope of the invention as defined in the following claims.

## Claims

1. A vehicle hybrid transmission comprising:
an input shaft (IN) configured so as to be connected to a motor (M) and receive power of an engine through a clutch (CL);
an output shaft (OUT) concentrically installed to the input shaft (IN) so as be rotatable relative thereto;
a counter shaft (CS) receiving the power from the input shaft (IN) and installed parallel to the output shaft (OUT);
a plurality of shift gear pairs pairing up with each other to be circumscribed on the counter shaft (CS) and the output shaft (OUT) and forming a series of forward shift stages;
a plurality of synchronizers synchronizing shift gears on the output shaft (OUT) forming the shift gear pairs with the output shaft (OUT) such that the shift gears are connected to or disconnected from the output shaft (OUT);
a gear shift unit (GSU) for driving the plurality of synchronizers;
a clutch actuator (CA) for controlling the clutch (CL); and
a controller (CTL) configured to connect a first driven gear (PI) to the output shaft (OUT) and reversely rotate the motor (M) in opposition to driving of the forward shift stages by driving the clutch actuator (CA) and driving the synchronizers using the gear shift unit (GSU) according to a selection signal of a reverse shift stage by a driver.

2. The vehicle hybrid transmission according to claim 1, wherein:
the output shaft (OUT) is installed so as to linearly extend from the input shaft (IN) in such a manner that one end of the output shaft (OUT) is supported on the input shaft (IN) by a bearing; and
one of the plurality of synchronizers directly connects the output shaft (OUT) to the input shaft (IN) or disconnect the output shaft (OUT) therefrom.

3. The vehicle hybrid transmission according to claim 2, wherein:
the input shaft (IN) is provided with a counter driving gear (CD); and
the counter shaft (CS) is integrally provided with a counter driven gear (CP) engaged to the counter driving gear (CD) so as to be always rotated by the input shaft (IN).

4. The vehicle hybrid transmission according to claim 3, wherein:
the first driven gear (PI) to realize a first shift stage and a second driven gear (P2) to realize a second shift stage are adjacently arranged on the output shaft (OUT);
a first & second synchronizer (1&2S) is provided between the first and second driven gears (P1 and P2); and
when the controller (CTL) connects the first driven gear (PI) to the output shaft (OUT) according to the selection signal of the reverse shift stage by the driver, the first driven gear (PI) is connected to the output shaft (OUT) by the first & second synchronizer (1&2S).

5. A method of controlling the hybrid transmission according to any one of claims 1 to 4, comprising:
performing reverse operation determination (S10) of determining whether the drive selects the reverse shift stage;
performing forward shift stage fastening of connecting the first driven gear (PI) to the output shaft (OUT) by operating the synchronizers using the gear shift unit (GSU) when the driver is determined to select the reverse shift stage; and
performing motor reverse rotation (S40) of performing reverse traveling by reversely rotating the motor (M) in a direction opposite to forward driving when the first driven gear (PI) is fastened to the output shaft (OUT).

6. The method according to claim 5, further comprising performing clutch release (S20) of releasing the clutch (CL) when the clutch (CL) is fastened before the performing forward shift stage fastening (S30) after the performing reverse operation determination (S10).

7. A method of controlling the vehicle hybrid transmission according to any one of claims 1 to 4, comprising:
performing reverse operation determination (S10) of determining whether the driver selects the reverse shift stage;
performing forward shift stage fastening of fastening any one of the entire forward shift stages comprising the first shift stage, according to a gradient of a road, by operating the synchronizers using the gear shift unit (GSU) when the driver is determined to select the reverse shift stage; and
performing motor reverse rotation (S40) of performing reverse traveling by reversely rotating the motor (M) in a direction opposite to forward driving when one shift stage is fastened.
